(19) Europäisches Patentamt
European Patent Office
Office européen des brevets

(11) Numéro de publication : 0 322 322 B1

(12) # FASCICULE DE BREVET EUROPEEN

(45) Date de publication du fascicule du brevet : **04.03.92 Bulletin 92/10**

(51) Int. Cl.⁵ : **B01D 19/04,** C08L 83/04

(21) Numéro de dépôt : **88420411.6**

(22) Date de dépôt : **06.12.88**

(54) **Antimousse comportant une resine MQ.**

(30) Priorité : **08.12.87 FR 8717368**

(43) Date de publication de la demande : **28.06.89 Bulletin 89/26**

(45) Mention de la délivrance du brevet : **04.03.92 Bulletin 92/10**

(84) Etats contractants désignés : **AT BE CH DE ES FR GB GR IT LI LU NL SE**

(56) Documents cités :
**DE-A- 2 518 053**
**FR-A- 2 396 577**
**US-A- 3 388 073**
**US-A- 4 082 690**

(73) Titulaire : **RHONE-POULENC CHIMIE**
**25, quai Paul Doumer**
**F-92408 Courbevoie Cédex (FR)**

(72) Inventeur : **Araud, Claude**
**Immeuble "Les Sequoias" 1, route de Champagne**
**F-69130 Ecully (FR)**

(74) Mandataire : **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

**EP 0 322 322 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un antimousse silicone exempt de charge minérale comportant un diorganopolysiloxane (A), une résine MQ (B) et un polydiorganosiloxane cyclique (C).

Il est bien connu de l'homme de métier que certains silicones utilisés éventuellement en association avec des charges minérales siliceuses, présentent des propriétés antimousses et sont utilisables pour cette propriété dans des systèmes moussants aqueux (par exemple en détergence) et/ou non aqueux (par exemple les produits pétroliers).

Ainsi le brevet US-A-4 145 308 enseigne qu'une émulsion aqueuse de la combinaison (A) et (B) seule ou de préférence associée à de la silice et, éventuellement, à de l'acide oléique, présente un effet antimousse.

Le brevet US-A-3 455 839 enseigne l'utilisation d'une composition antimousse pour système aqueux comportant les constituants (A) et (B) associée à une charge minérale siliceuse, et le brevet US-A-4 486 336 perfectionne le brevet US-A-3 455 839 en préconisant d'utiliser pour (A), deux huiles silicones de viscosités différentes.

Le brevet US-A-4 082 690 décrit un antimousse pour système non aqueux qui est une combinaison des constituants (A) et (B) associés à un solvant hydrocarboné.

Le brevet US-A-4 104 186 décrit comme antimousse l'association de (A) avec une résine méthylsilsesquioxane essentiellement formée de motif T plus particulièrement adaptée pour les compositions détergentes. Cet antimousse est de préférence associé à de la silice traitée.

L'antimousse comportant seulement les constituants (A) et (B), (US-A-4 145 308), présente un très bon pouvoir antimousse mais cette association binaire, non dissoute dans un solvant hydrocarboné, est inutilisable en pratique du fait de sa très forte viscosité.

Si on ajoute à cette association binaires de (A) et (B) une silice traitée (US-A-3 455 839), on obtient certes un antimousse plus fluide mais il existe un risque que cette silice décante lors du stockage. De plus un tel antimousse n'est pas utilisable pour les milieux pétroliers du fait de la présence de silice et, de façon générale, dans les systèmes à traiter où une charge solide est indésirable.

Si on ajoute à cette association binaire de (A) et (B) un solvant hydrocarboné à la place de la silice (US-A-4 082 690) on obtient un antimousse qui convient pour les milieux non-aqueux mais qui ne convient pas pour les milieux aqueux, en particulier pour la détergence.

La présente invention a pour but de proposer une composition antimousse fluide qui puisse ne comporter que des constituants polyorganosiloxanes, qui soient exempts de silice et qui soient utilisables à la fois pour des systèmes aqueux et non aqueux.

Elle a également pour but de proposer une composition antimousse, non toxique fluide adaptée aux compositions détergentes en poudre ou liquides qui ne se fixe pas sur les tissus à laver et sur les parois des machines à laver.

Ces buts et d'autres sont atteints par la présente invention qui concerne en effet une composition antimousse fluide exempte de charge minérale, caractérisée en ce qu'elle comporte :

(A) - 15 à 80 % en poids d'au moins un polymère polydiméthylsiloxane ne présentant , dans la chaîne, pas plus de 3% en nombre de motifs siloxane autres que les motifs D (diméthysiloxy)

(B) - 1 à 15 % en poids d'un résine méthylpolysiloxane constituée de motifs de formule $R(CH_3)_2SiO_{0,5}$ et $SiO_2$ où le symbole R représente un radical alkyle ayant de 1 à 3 atomes de carbone ou le radical vinyle, avec un rapport en nombre de motifs $R(CH_3)_2SiO_{0,5}$ au nombre de motifs $SiO_2$ compris entre 0,4 et 1,2 inclusivement, et

(C) - 5 à 84 % en poids d'un polydiorganosiloxane cyclique de formule :

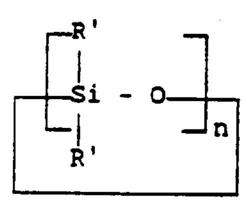

dans laquelle :

les symboles R', identiques ou différents, représentent un radical R, R ayant la signification donnée ci-dessus, ou un atome d'hydrogène et n est un nombre entier compris entre 3 et 15 inclusivement,

ladite composition antimousse présentant une viscosité à 25 °C inférieure à 50 000 mPa.s.

Tous les pourcentages ci-dessus sont des pourcentages en poids calculés par rapport au poids total des

constituants (A), (B) et (C). Par ailleurs, dans ce qui suit, sauf mentions contraires, les pourcentages et parties sont en poids.

On préfère plus particulièrement les compositions suivantes :

(A) : 30 à 50 %,

(B) : 3 à 10 %,

(C) : 40 à 67 %.

Les polymères (A) sont amplement décrits dans la littérature et ils sont disponibles dans le commerce. On préfère plus spécialement utiliser les polymères (A) bloqués à chacune des extrémités de leur chaîne par un motif triméthylsiloxyle. Toutefois des polymères bloqués autrement par exemple par un groupe hydroxyle ou par un motif $(RO)_3SiO_{0,5}$ avec R alkyle ayant de 1 à 3 atomes de carbone ne sont pas exclus.

La viscosité de (A) peut varier dans de larges limites entre 10 et $10^6$ mPa.s à 25 °C, de préférence entre 30 000 et 150 000 mPa.s.

On peut utiliser également un mélange de polymère (A) de viscosités différentes.

La résine méthylsiloxane (B) est un produit bien connu de l'homme de métier spécialiste des silicones, elle est disponible dans le commerce. En plus du radical vinyle, R peut désigner un radical méthyle, éthyle, isopropyle et n-propyle. Une telle résine est dénommée résine MQ.

Les procédées de fabrication de ces résines sont par exemple décrits dans les brevets français FR-A-1 046 736 et FR-A-1 134 005. On opère au sein de solvants inertes et on conserve les résines ainsi préparées dans ces solvants, tels que : le toluène, le xylène, le cyclohexane, le méthylcyclohexane et le chlorobenzène. Les solutions finalement obtenues contiennent de 30 à 75 % en poids de résine.

Ces résines comportent généralement de 0,5 à 6 % en poids de groupes hydroxyles liés au silicium. La présence de ces groupes hydroxyles n'est pas nuisible à l'effet antimousse. Toutefois, si on le désire, on peut abaisser la teneur en hydroxyle par réaction notamment avec un silane monofonctionnel tel que le triméthylchlorosilane en suivant par exemple l'enseignement de FR-A-1 526 681.

Selon une variante, la résine méthylpolysiloxane peut comporter en outre jusqu'à 10 % en nombre d'un motif de formule : $CH_3RSiO$, R ayant la signification donnée ci-dessus, par rapport au nombre de motifs M : $R(CH_3)_2\ SiO_{0,5}$ et Q : $SiO_2$. Elle est alors denommée résine MDQ.

Essentiellement pour des raisons de disponibilité et de coût on préfère utiliser les résines (B) pour lesquelles R est un méthyle.

Le constituant (C) est un polydiorganosiloxane cyclique de formule :

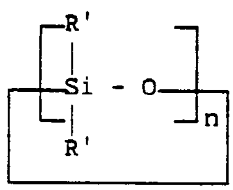

R' et n ayant la signification donnée ci-dessus.

Ce constituant (C) joue en fait le rôle de diluant vis-à-vis des constituants (A) et (B).

Par rapport aux solvants hydrocarbonés utilisés auparavant, ce constituant (C) a l'avantage de présenter une meilleure compatibilité avec les constituants (A) et (B) et présente également un certain effet antimousse que ne possèdent pas les solvants hydrocarbonés.

En outre l'utilisation de (C) à la place de solvant hydrocarboné permet d'utiliser les compositions antimousses selon l'invention dans des systèmes aqueux tels que les compositions de fermentation biologique, les compositions détergentes liquides et les compositions pesticides.

Ces compositions antimousses peuvent être mises aisément sous forme d'émulsions ou de dispersions aqueuses par les procédés conventionnels.

Par rapport à la silice utilisée auparavant, ce constituant (C) présente l'avantage, à la différence de la silice, de ne pas décanter au stockage et de conduire à une composition antimousse qui est utilisable dans des milieux où il est impossible d'introduire de la silice, par exemple dans les milieux pétroliers et dans les fluides hydrauliques.

Le composé (C) peut être n'importe quel produit liquide ou solide ci-dessus, à la triple condition qu'il soit inerte vis-à-vis des constituants (A) et (B), qu'il soit soluble dans le mélange des constituants (A) et (B) et qu'il conduise à une composition qui soit suffisamment fluide pour être manipulable, c'est-à-dire que cette composition présente une viscosité inférieure à 50 000 mPa.s, de préférence inférieure à 20 000 mPa.s, de façon encore plus préférée, comprise entre 100 et 10 000 mPa.s à 25 °C.

Comme composés (C) liquides à 25 °C utilisables, on peut par exemple citer :
$D_4$, $D_5$, $D_6$, $D_7$, $D'_n$ avec n = 3 à 15 inclusivement,
$(D^{Vi})_n$ avec n = 3 à 6, $D^{Et}_3$, $D^{Et}_5$,
D est le motif $(CH_3)_2SiO$
D' est le motif $(CH_3)HSiO$
$D^{Vi}$ est le motif $(CH_2 = CH)(CH_3)SiO$
$D^{Et}$ est le motif $(CH_3)(C_2H_5)SiO$

Comme composés (C) solides à 25 °C utilisables, on peut par exemple citer : $D_3$, $D_8$ et $D^{Et}_4$.

Les composés (C) et leur procédé de préparation sont des produits connus, amplement décrits dans la littérature. Par ailleurs la plupart sont disponibles dans le commerce.

Du fait de leur disponibilité et de leur faible coût, on préfère plus particulièrement utiliser $D_3$, $D_4$, $D_5$ et leurs divers mélanges possibles.

Les compositions selon l'invention peuvent être préparées de préférence par le procédé suivant :

On part de résine (B) en solution dans un solvant organique (généralement 30 à 70 % en poids de résine dans la solution).

A cette solution on ajoute, sous agitation, une quantité appropriée de polymère polydiméthylsiloxane (A). On homogénéise et on élimine la totalité du solvant par des moyens connus tels que par évaporation du solvant par chauffage, par extraction sous pression réduite ou par combinaison de ces deux moyens.

Au mélange homogène de (A) et (B) ainsi obtenu on ajoute le composé (C). En général une simple homogénéisation à froid est suffisante. Un léger chauffage à 60-150 °C peut être approprié surtout dans le cas où le composé (C) est solide.

On peut incorporer les compositions telles quelles dans le système moussant à n'importe quel stade approprié du traitement en utilisant n'importe quelle technique connue. A titre illustratif, on peut utiliser les compositions pour rompre ou éliminer une certaine hauteur de mousse existante, les introduire dans le système avant l'apparition du moussage pour prévenir (empêcher) ce dernier. Le système moussant à traiter peut être choisi notamment parmi les milieux pétroliers, les milieux de fermentation biologique, les compositions détergentes liquides , et les émulsions aqueuses phytosanitaires.

La quantité de composition utilisée pour diminuer ou éviter la mousse peut varier dans de larges limites. Ces limites varient en fonction de la nature du système à traiter, de la gravité (de l'intensité) du moussage engendré par le système à un moment donné. Généralement la quantité utilisée est de 1 à 200, le plus souvent entre 5 et 100 parties de composition antimousse silicone par million de parties de système aqueux ou non aqueux à traiter.

Toutefois pour certaines applications spécifiques les quantités utilisées peuvent être supérieures.

Ainsi on a trouvé que l'antimousse conforme à l'invention est utilisable à la dose de 0,05 à 2, de préférence de 0,1 à 1 partie d'antimousse silicone pour 100 parties de bouillie détergente avant atomisation.

Cette bouillie détergente dénommée également "slurry" est généralement la solution aqueuse du mélange de système tensio-actif, de polyphosphate et de sulfate de soude que l'on passe dans les tours d'atomisation pour obtenir de la poudre détergente.

L'addition de l'antimousse à cette bouillie permet de la désaérer efficacement et d'obtenir une poudre de lessive plus dense.

Il est également possible d'utiliser la composition antimousse selon l'invention sous la forme d'une dispersion (émulsion) aqueuse du type huile dans eau. Sous cette forme, les compositions selon l'invention se dispersent plus facilement dans les systèmes aqueux moussants et agissent plus rapidement.

Pour préparer ces émulsions on peut utiliser comme agents tensio-actifs, ceux habituellement utilisés pour mettre en émulsion les silicones dans la mesure où ils sont compatibles avec le système à traiter. On utilise généralement des agents tensio-actifs non ioniques disponibles dans le commerce tels que :

– des esters d'acides et du sorbitol ou de ses anhydrides, tels que le monostéarate de sorbitan,
– des esters d'acides gras et de polyéthylèneglycols tels que les stéarates polyoxyéthylénés,
– des esters d'acides gras et du sorbitol ou de ses anhydrides ayant réagi avec 4 à 25 moles d'oxyde d'éthylène tels que le monostéarate de sorbitan polyoxyéthyléné,
– des alkyphénols polyoxyéthylénés tels que le nonylphénol polyoxyéthyléné.

On utilise généralement de 5 à 50 parties de tensio-actif pour 100 parties de constituant (A) pour préparer ces émulsions. On peut par exemple mélanger de l'eau et l'agent tensio actif entre 60 et 100 °C sous forte agitation avec effet de cisaillement et ajouter la composition antimousse en ajoutant éventuellement de l'eau tout en chauffant à une température de 60-100 °C en maintenant une forte agitation avec effet de cisaillement. On passe ensuite l'émulsion refroidie dans un broyeur à colloïdes et on dilue le broyat par de l'eau en vue d'obtenir l'émulsion antimousse finale.

Les exemples suivants illustrent l'invention sans en limiter la portée.

- EXAMPLE 1 ET EXEMPLE COMPARATIF 1C :

- Détermination du pouvoir antimousse :

pour déterminer le pouvoir antimousse des compositions préparées dans les exemples, on utilise un appareil d'agitation de laboratoire à usage multiple, possédant un axe horizontal oscillant sur lequel sont fixés, à angle droit et horizontalement, des bras métalliques dont les extrémités possèdent des pinces d'une ouverture suffisante pour tenir fortement des poudriers en verre d'une contenance de 250 $cm^3$.

La fréquence des oscillations de l'axe est d'environ 250 par minute ; l'amplitude de chaque oscillation au niveau de l'insertion des poudriers est de 5 cm. La règlage d'une minuterie électronique permet d'établir un cycle de démoussage constitué d'un temps d'agitation de 10 secondes et d'un temps d'arrêt de 60 secondes.

On introduit, dans chaque poudrier en verre, 100 $cm^3$ d'un système moussant M1 à M4 (défini ci-après) et 5 mg de composition antimousse et met l'agitation de l'appareil en marche. On note lors du premier cycle de démoussage, à partir de l'arrêt de l'agitation, donc pendant la période d'arrêt de 60 secondes, le temps en secondes mis par la mousse dans le poudrier pour disparaître ; c'est le temps nécessaire au premier démoussage $T_1$.

On note ensuite le nombre total de cycles de démoussage pour lesquels le temps de démoussage est inférieur ou égal à 60 secondes ; ce nombre est nommé N.

- Préparation de la composition antimousse de l'exemple 1 :

On part de 7,5 parties de résine (B) MQ en solution dans 50 parties de xylène. La résine MQ présente les caractéristiques suivantes :

– rapport en nombre des motifs M sur les motifs Q : 0,76,
– % en poids de groupe hydroxyle : 2,5.

On ajoute à cette solution 42,5 parties d'huile (A) $\alpha,\omega$-(triméthylsiloxy) polydiméthylsiloxane de viscosité 100 00 mPa.s à 25 °C sous forte agitation. On porte le mélange à 150 °C sous pression réduite de 8 KPa jusqu'à ce que tout le xylène soit éliminé. On ajoute alors par simple mélange à froid 50 parties de décaméthylcyclopentasiloxane (C). On obtient l'antimousse sous forme d'un mélange homogène présentant une viscosité de 4 500 mPa.s à 25 °C et ayant la composition suivante :

(A) : 42,5 %,
(B) : 7,5 %, et
(C) : 50 %.

- Préparation de la composition antimousse de l'exemple comparatif 1c :

Elle présente les mêmes constituants (A) et (B) et les mêmes teneurs sauf que le constituant (C) est remplacé totalement par du xylène.

Cet antimousse est prépare conformément à l'enseignement de US-A-4 082 690 et présente donc la composition suivante :

(A) :42,5 %,
(B) : 7,5 %,
Xylène (C) : 50 %,
viscosité du mélange à 25 °C : 850 mPa.s.

- **Définition des systèmes moussants M1 à M4 :**

système moussant M1 :

| | |
|---|---|
| - eau distillée | : 1 000 $cm^3$ |
| - dioctylsulfosuccinate de sodium | : 5 g |

système moussant M2 :

| | |
|---|---|
| - eau distillée | : 1 000 $cm^3$ |
| - nonylphénolpolyoxyéthyléné à environ 10 motifs polyoxyde d'éthylène | : 5 g |

système M3 :

| | |
|---|---|
| - eau distillée | : 1 000 $cm^3$ |
| - lessive commerciale en poudre sans antimousse | : 5 g |

système M4 :

| | |
|---|---|
| - eau distillée | : 1 000 $cm^3$ |
| - suspension aqueuse de pesticide ISOPROTURON ® commercialisée par la Société RHONE-POULENC AGROCHIMIE | : 5 g |

Sur ces quatre systèmes moussants M1 à M4 on détermine le pouvoir antimousse des compositions des exemples 1 et 1c à la dose de 50 ppm (parties par million de parties de M1 à M4).

Les résultats obtenus sont rassemblés dans le tableau 1 ci-après :

Tableau 1

| Système moussant | Antimousse de l'exemple | T1 (en s) | N |
|---|---|---|---|
| M1 | 1 | 4 | 102 |
| | 1c | 6 | 49 |
| M2 | 1 | 7 | 114 |
| | 1c | 8 | 105 |
| M3 | 1 | 4 | 10 |
| | 1c | 9 | 4 |
| M4 | 1 | 4 | 63 |
| | 1c | 5 | 18 |

Du tableau 1, il apparaît clairement que le pouvoir antimousse du produit de l'exemple 1 est pour chacun des milieux M1 à M4 très supérieur à celui du produit de l'exemple comparatif 1c.

- EXEMPLES 2 A 5 ET EXEMPLE COMPARATIF 6c :

En suivant le mode opératoire de l'exemple 1 on prépare des compositions antimousses en faisant varier la nature et la teneur des constituants (A), (B) et (C) puis on évalue leur pouvoir antimousse sur les systèmes moussants M1 et M2 également à la dose de 50 ppm.

L'exemple comparatif 6c ne contient pas de constituant (C).

Les résultats obtenus ainsi que la définition des antimousses sont rassemblés dans le tableau 2 ci-après :

Tableau 2

| Exemple | (A) % | γ (A) m.Pa.s | (B) % | (C) % | (C) | γ (A) + (B) + (C) | M1 | | M2 | |
|---|---|---|---|---|---|---|---|---|---|---|
| | | | | | | | T1 | N | T1 | N |
| 1 | 42,5 | 100 000 | 7,5 | 50 | D5 | 4 500 | 4 | 102 | 7 | 114 |
| 2 | 42,5 | 300 | 7,5 | 50 | D5 | 40 | 12 | 2 | 4 | 18 |
| 3 | 42,5 | 60 000 | 7,5 | 50 | D5 | 2 500 | 5 | 95 | 8 | 95 |
| 4 | 42,5 | 100 000 | 7,5 | 50 | D4 | 4 000 | 4 | 80 | 7 | 109 |
| 5 | 28,5 | 100 000 | 1,5 | 70 | D5 | 400 | 6 | 27 | 10 | 58 |
| 6c | 85,0 | 100 000 | 15,0 | 0 | - | 130 000 | 3 | 125 | 4 | 142 |
| 1c | 42,5 | 100 000 | 7,5 | 50 | xylène | 40 | 6 | 49 | 8 | 105 |

Du tableau 2, il apparaît que l'on obtient les meilleures propriétés antimousses pour les compositions contenant des huiles (A) de viscosités supérieures à 10 000 m.Pa.s.

Dans le tableau 2 : $\gamma$ représente la viscosité en m.Pa.s à 25 °C de l'huile (A) ou de l'antimousse.

La composition de l'exemple 6c bien que présentant un excellent effet antimousse est industriellement inutilisable car beaucoup trop visqueuse.

- EXEMPLE 6 :

- Désaération d'une bouillie détergente :

On part d'une bouillie de composition classique constituée de :

– 17 % en poids d'une base tensio-active comportant un agent tensio-actif non ionique, un savon et un alkylbenzènesulfonate de sodium,

– 45 % d'eau,

– 30 % de tripolyphosphate,

– 8 % de sulfate de soude.

A 1 000 parties de cette bouillie maintenue sous agitation, on ajoute 2 parties de l'antimousse de l'exemple 1.

Avant addition de l'antimousse la densité de la bouillie est de 1,05, elle est de 1,35 30 minutes après addition de l'antimousse et se maintient à cette valeur pendant encore 1 heure 30 minutes.

**Revendications**

1. Composition antimousse fluide exempte de charge minérale, caractérisée en ce qu'elle comporte :

(A) - 15 à 80 % en poids d'au moins un polymère polydiméthylsiloxane ne présentant, dans la chaîne, pas plus de 3% en nombre de motifs siloxane autres que les motifs D (diméthylsiloxy)

(B) - 1 à 15 % en poids d'un résine méthylpolysiloxane constituée de motifs de formule $R(CH_3)_2SiO_{0,5}$ et $SiO_2$ où le symbole R représente un radical alkyle ayant de 1 à 3 atomes de carbone ou le radical vinyle, avec un rapport en nombre de motifs $R(CH_3)_2SiO_{0,5}$ au nombre de motifs $SiO_2$ compris entre 0,4 et 1,2 inclusivement, et

(C) - 5 à 84 % en poids d'un polydiorganosiloxane cyclique de formule :

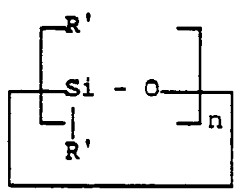

dans laquelle :

les symboles R′, identiques ou différents, représentent un radical R, R ayant la signification donnée ci-dessus, ou un atome d'hydrogène et n est un nombre entier compris entre 3 et 15 inclusivement,

ladit composition antimousse présentant une viscosité à 25 °C inférieure à 50 000 mPa.s.

2. Composition antimousse selon la revendication 1, caractérisée en ce que les pourcentages en poids des constituants (A), (B) et (C) sont les suivants :

(A) : 30 à 50 %,

(B) : 3 à 10 %,

(C) : 40 à 67 %

et en ce que ledit antimousse présente une viscosité à 25 °C comprise entre 100 et 10 000 m.Pa.s.

3. Composition antimousse selon l'une quelconque des revendications précédentes, caractérisée en ce que le polymère (A) présente une viscosité à 25 °C comprise entre 30 000 et 150 000 m.Pa.s.

4. Composition antimousse selon l'une quelconque des revendications précédentes, caractérisée en ce que la résine (B) comporte en outre jusqu'à 10 % en nombre d'un motif de formule $CH_3RSiO$, R ayant la signification donnée ci-dessus, par rapport au nombre de motifs M et Q.

5. Composition antimousse selon l'une quelconque des revendications précédentes, caractérisée en ce que le composé (C) est choisi parmi $D_3$, $D_4$, $D_5$ et leurs divers mélanges possibles, D représentant le motif diméthylsiloxyle.

6. Procédé de préparation d'une composition antimousse telle que définie à l'une quelconque des revendications 1 à 5, caractérisé en ce que :

– on incorpore sous agitation le polymère (A) à une solution de résine (B) dans un solvant organique,
– on élimine le solvant organique et,
– on ajoute le constituant (C) par simple mélange.

7. Composition antimousse telle que définie à l'une quelconque des revendications 1 à 5, sous forme d'une émulsions aqueuse.

8. Procédé pour diminuer et/ou empêcher le moussage d'un système moussant aqueux ou non aqueux, caractérisé en ce qu'il consiste à ajouter à ce système une quantité efficace d'une composition antimousse telle que définie à l'une quelconque des revendications 1 à 5.

9. Procédé selon la revendication 8, caractérisé en ce qu'on ajoute de 1 à 200 parties en poids de composition antimousse pour un million de parties du système moussant.

10. Procédé selon la revendication 8 ou 9, caractérisé en ce que le système moussant à traiter est choisi parmi les milieux pétroliers, les milieux de fermentation biologique, les compositions détergentes liquides, et les émulsions aqueuses phytosanitaires.

11. Procédé selon la revendication 8, caractérisé en ce que le système aqueux à traiter est une bouillie détergente avant atomisation et en ce qu'on ajoute de 0,05 à 2 parties en poids de composition antimousse pour 100 parties de bouillie détergente.

## Patentansprüche

1. Fließende, schaumregulierende Zusammensetzung ohne mineralischen Füllstoff, dadurch gekennzeichnet, daß sie enthält:

(A) 15 bis 80 Gew.% zumindest eines Polydimethylsiloxanpolymeren, das in der Kette nicht mehr als 3%, bezogen auf die Anzahl, von Gruppen D (Dimethylsiloxy) verschiedene Siloxangruppen aufweist,

(B) 1 bis 15 Gew.% eines Methylpolysiloxanharzes, bestehend aus Gruppen der Formel $R(CH_3)_2SiO_{0,5}$ und $SiO_2$, worin das Symbol R einen Alkylrest mit 1 bis 3 Kohlenstoffatomen oder den Vinylrest wiedergibt, mit einem Verhältnis der Zahl der Gruppen $R(CH_3)_2SiO_{0,5}$ zur Zahl der Gruppen $SiO_2$ zwischen 0,4 und 1,2 einschließlich, und

(C) 5 bis 84 Gew.% eines cyclischen Polydiorganosiloxans der Formel

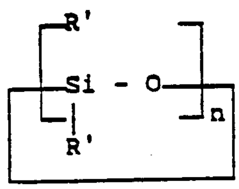

worin

die Symbole R′, die gleich oder verschieden sind, einen Rest R, wobei R die vorstehend angegebene Bedeutung besitzt, oder ein Wasserstoffatom wiedergeben und n eine ganze Zahl zwischen 3 und 15 einschließlich ist, wobei die schamregulierende Zusammensetzung eine Viskosität bei 25°C von geringer als 50 000 mPa.s besitzt.

2. Schaumregulierende Zusammensetzung gemäß Anspruch 1, dadurch gekennzeichnet, daß die Gewichtsprozentanteile der Bestandteile (A), (B) und (C) die folgenden sind:

(A): 30 bis 50%,
(B): 3 bis 10%,
(C): 40 bis 67%,

und daß die schaumregulierende Zusammensetzung eine Viskosität bei 25°C zwischen 100 und 10 000 m.Pa.s besitzt.

3. Schaumregulierende Zusammensetzung gemäß einem der vorhergehenden Ansprüche, dadurch gekennzeichnet, daß das Polymere (A) eine Viskosität bei 25°C zwischen 30 000 und 150 000 m.Pa.s besitzt.

4. Schaumregulierende Zusammensetzung gemäß einem der vorhergehenden Ansprüche, dadurch gekennzeichnet, daß das Harz (B) außerdem bis zu 10%, ausgedrückt als Anzahl,einer Gruppe der Formel $CH_3RSiO$, wobei R die vorstehend angegebene Bedeutung besitzt, bezogen auf die Zahl der Gruppen M und

Q,besitzt.

5. Schaumregulierende Zusammensetzung gemäß einem der vorhergehenden Ansprüche, dadurch gekennzeichnet, daß die Verbindung (C) unter $D_3$, $D_4$, $D_5$ und deren verschiedenen möglichen Gemischen ausgewählt wird, wobei D die Dimethylsiloxygruppe bedeutet.

6. Verfahren zur Herstellung einer schaumregulierenden Zusammensetzung, wie in einem der Ansprüche 1 bis 5 definiert, dadurch gekennzeichnet, daß

- man unter Rühren das Polymere (A) zu einer Lösung des Harzes (B) in einem organischen Lösungsmittel einbringt,
- man das organische Lösungsmittel entfernt und
- man den Bestandteil (C) durch einfaches Mischen zugibt.

7. Schaumregulierende Zusammensetzung gemäß einem der Ansprüche 1 bis 5 in Form einer wäßrigen Emulsion.

8. Verfahren, um die Schaumbildung eines wäßrigen oder nicht-wäßrigen, schäumenden Systems zu vermindern und/oder zu verhindern, dadurch gekennzeichnet, daß man zu diesem System eine wirksame Menge einer schaumregulierenden Zusammensetzung, wie in einem der Ansprüche 1 bis 5 definiert, zugibt.

9. Verfahren gemäß Anspruch 8, dadurch gekennzeichnet, daß man 1 bis 200 Gew.Teile der schaumregulierenden Zusammensetzung je 1 Million Teile des schäumenden Systems zugibt.

10. Verfahren gemäß Anspruch 8 oder 9, dadurch gekennzeichnet, daß das zu behandelnde, schäumende System unter den Erdölmilieus, den biologischen Fermentationsmilieus, den flüssigen Detergenszusammensetzungen und den phytosaniltären, wäßrigen Emulsionen ausgewählt ist.

11. Verfahren gemäß Anspruch 8, dadurch gekennzeichnet, daß das zu behandelnde, wäßrige System eine Detergensaufschlämmung vor der Zerstäubung ist und daß man 0,05 bis 2 Gew.Teile schaumregulierende Zusammensetzung je 100 teile Detergensaufschlämmung zufügt.

## Claims

1. Fluid antifoam composition free from inorganic filler, characterised in that it comprises:

(A) - 15 to 80% by weight of at least one polydimethylsiloxane polymer not having more than 3% by number of siloxane units other than D ( dimethylsiloxy) units in the chain,

(B) - 1 to 15% by weight of a methylpolysiloxane resin consisting of units of formula $R(CH_3)_2SiO_{0.5}$ and $SiO_2$ where the symbol R represents an alkyl radical having from 1 to 3 carbon atoms or a vinyl radical, with a ratio by number of $R(CH_3)_2SiO_{0.5}$ units to the number of $SiO_2$ units of between 0.4 and 1.2 inclusive, and

(C) - 5 to 84% by weight of a cyclic polydiorganosiloxane of formula:

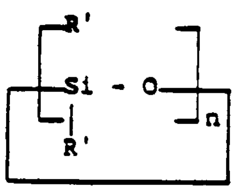

in which:

the symbols R′, which may be identical or different, represent a radical R, R having the meaning given above, or a hydrogen atom and n is an integer between 3 and 15 inclusive, the said antifoam composition having a viscosity at 25°C of less than 50,000 mPa.s.

2. Antifoam composition according to Claim 1, characterised in that the percentages by weight of the constituents (A), (B) and (C) are as follows:

(A) : 30 to 50%,
(B) : 3 to 10%,
(C) : 40 to 67%

and in that the said antifoam has a viscosity at 25°C of between 100 and 10,000 mPa.s.

3. Antifoam composition according to either one of the preceding claims, characterised in that polymer (A) has a viscosity at 25°C of between 30,000 and 150,000 mPa.s.

4. Antifoam composition according to any one of the preceding claims, characterised in that the resin (B) also comprises up to 10% by number of a unit of formula $CH_3RSiO$, R having the meaning given above, relative to the number of units M and Q.

5. Antifoam composition according to any one of the preceding claims, characterised in that the compound (C) is chosen from $D_3$, $D_4$, $D_5$ and their various possible mixtures, D representing the dimethylsiloxy unit.

6. Process for the preparation of an antifoam composition as defined in any one of Claims 1 to 5, characterised in that:

– the polymer (A) is incorporated, with stirring, in a solution of resin (B) in an organic solvent,

– the organic solvent is removed and

– the constituent (C) is added by simple mixing.

7. Antifoam composition as defined in any one of Claims 1 to 5, in the form of an aqueous emulsion.

8. Process for reducing and/or preventing foaming of an aqueous or non-aqueous foaming system, characterised in that it consists in adding to this system an effective amount of an antifoam composition as defined in any one of Claims 1 to 5.

9. Process according to Claim 8, characterised in that from 1 to 200 parts by weight of antifoam composition are added per million parts of the foaming system.

10. Process according to Claim 8 or 9, characterised in that the foaming system to be treated is chosen from petroleum media, biological fermentation media, liquid detergent compositions and aqueous emulsions for plant protection.

11. Process according to Claim 8, characterised in that the aqueous system to be treated is a detergent spraying mixture before atomisation and in that from 0.05 to 2 parts by weight of antifoam composition are added per 100 parts of detergent spray mixture.